(19)

Europäisches
Patentamt
European
Patent Office
Office européen
des brevets

(11) **EP 3 650 143 A1**

(12) **EUROPEAN PATENT APPLICATION**

(43) Date of publication:
**13.05.2020 Bulletin 2020/20**

(21) Application number: **19206908.6**

(22) Date of filing: **04.11.2019**

(51) Int Cl.:
**B22F 3/105** (2006.01)  **B33Y 50/02** (2015.01)
**B33Y 10/00** (2015.01)  **B33Y 30/00** (2015.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.11.2018 US 201862757859 P
24.10.2019 US 201916662701**

(71) Applicant: **General Electric Company
Schenectady, NY 12345 (US)**

(72) Inventor: **Gold, Scott Alan
Cincinnati, OH Ohio 45215 (US)**

(74) Representative: **Hafner & Kohl PartmbB
Schleiermacherstraße 25
90491 Nürnberg (DE)**

(54) **METHOD FOR DETECTING ERRORS AND COMPENSATING FOR THERMAL DISSIPATION IN AN ADDITIVE MANUFACTURING PROCESS**

(57)    A system (100) and method (300) of monitoring a powder-bed additive manufacturing process is provided where a layer of additive powder (142) is fused using an energy source (120) and electromagnetic emission signals are measured by a melt pool monitoring system (200) to monitor the print process. The method (300) includes determining thermal conductive properties of the part and the powder bed, e.g., by estimating thermal lag between the printing of adjacent portions of the part or determining thermal resistance using a thermal model of the part and the powder bed. The method (300) may include obtaining a predicted emission signal based at least in part on these thermal conductive properties and comparing with measured emission signals. An alert may be provided or a process adjustment may be made when a difference between the measured emission signals and the predicted emission signal exceeds a predetermined error threshold.

FIG. 4

EP 3 650 143 A1

## Description

PRIORITY INFORMATION

The present applicant claims priority to U.S. Provisional Patent Application Serial No. 62/757,859 titled "Method for Detecting Errors and Compensating for Thermal Dissipation in an Additive Manufacturing Process" filed on Nov. 9, 2018, the disclosure of which is incorporated by reference herein.

FIELD

The present disclosure generally relates to additive manufacturing machines, or more particularly, to error detection systems and methods for an additive manufacturing machine.

BACKGROUND

Additive manufacturing (AM) processes generally involve the buildup of one or more materials to make a net or near net shape (NNS) object, in contrast to subtractive manufacturing methods. Though "additive manufacturing" is an industry standard term (ISO/ASTM52900), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model.

A particular type of AM process uses an energy source such as an irradiation emission directing device that directs an energy beam, for example, an electron beam or a laser beam, to sinter or melt a powder material, creating a solid three-dimensional object in which particles of the powder material are bonded together. AM processes may use different material systems or additive powders, such as engineering plastics, thermoplastic elastomers, metals, and/or ceramics. Laser sintering or melting is a notable AM process for rapid fabrication of functional prototypes and tools. Applications include direct manufacturing of complex workpieces, patterns for investment casting, metal molds for injection molding and die casting, and molds and cores for sand casting. Fabrication of prototype objects to enhance communication and testing of concepts during the design cycle are other common usages of AM processes.

Selective laser sintering, direct laser sintering, selective laser melting, and direct laser melting are common industry terms used to refer to producing three-dimensional (3D) objects by using a laser beam to sinter or melt a fine powder. More accurately, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate and the effects of processing parameters on the microstructural evolution during the layer manufacturing process have not been well understood. This method of fabrication is accompanied by multiple modes of heat, mass, and momentum transfer, and chemical reactions that make the process very complex.

During direct metal laser sintering (DMLS) or direct metal laser melting (DMLM), an apparatus builds objects in a layer-by-layer manner by sintering or melting a powder material using an energy beam. The powder to be melted by the energy beam is spread evenly over a powder bed on a build platform, and the energy beam sinters or melts a cross sectional layer of the object being built under control of an irradiation emission directing device. The build platform is lowered and another layer of powder is spread over the powder bed and object being built, followed by successive melting/sintering of the powder. The process is repeated until the part is completely built up from the melted/sintered powder material.

After fabrication of the part is complete, various post-processing procedures may be applied to the part. Post processing procedures include removal of excess powder by, for example, blowing or vacuuming. Other post processing procedures include a stress relief process. Additionally, thermal, mechanical, and chemical post processing procedures can be used to finish the part.

In order to monitor the additive manufacturing process, certain conventional additive manufacturing machines include melt pool monitoring systems. These monitoring systems typically include one or more cameras or light sensors for detecting light that is radiated or otherwise emitted from the melt pool generated by the energy beam. The camera or sensor values can be used to evaluate the quality of the build after completion of the build process. The quality evaluation may be used to adjust the build process, stop the build process, troubleshoot build process anomalies, issue a warning to the machine operator, and/or identify suspect or poor quality parts resulting from the build.

However, most melt pool monitoring systems and associated control methods do not consider the initial temperature of a region prior to fusing powder within that region when detecting process errors. Thus, if a toolpath of the energy source heats a single region within the part or powder bed multiple times within a short period of time, e.g., before thermal energy has had time to dissipate, a process fault may be triggered even though no issue is present. In addition, most melt pool monitoring systems perform data analysis after a build is completed or are otherwise complex and delayed in identifying process issues. Moreover, such melt pool monitoring systems are frequently not effective at identifying process faults that result in quality issues in finished parts, scrapped parts, increased material costs, and excessive machine downtime.

Accordingly, an additive manufacturing machine with improved error detection systems would be useful. More particularly, a system and method for utilizing a melt pool monitoring system to quickly and effectively detect process issues during operation of an additive manufacturing machine would be particularly beneficial.

BRIEF DESCRIPTION

Aspects and advantages will be set forth in part in the following description, or may be obvious from the description, or may be learned through practice of the invention.

According to one embodiment of the present subject matter, a method of monitoring a powder-bed additive manufacturing process is provided. The method includes depositing a layer of additive material on a powder bed of an additive manufacturing machine and selectively directing energy from an energy source onto the layer of additive material to fuse a portion of the layer of additive material. The method further includes obtaining a predicted emission signal based at least in part on the energy directed from the energy source and thermal conductive properties of the part and the powder bed, measuring emission signals from the powder bed using a melt pool monitoring system, determining a difference between the measured emission signals and the predicted emission signal, and generating an alert if the difference exceeds a predetermined error threshold.

According to another exemplary embodiment, an additive manufacturing machine is provided including a powder depositing system for depositing a layer of additive material onto a powder bed of the additive manufacturing machine, an energy source for selectively directing energy onto the layer of additive material to fuse a portion of the layer of additive material, and a melt pool monitoring system for measuring electromagnetic energy emitted from the powder bed. A controller is operably coupled to the melt pool monitoring system and configured for obtaining thermal conductive properties of the part and the powder bed, wherein the thermal conductive properties comprise one or more of a thermal lag characteristic or a thermal resistance characteristic. The controller is also configured for obtaining a predicted emission signal based at least in part on the energy directed from the energy source and the thermal conductive properties of the part and the powder bed, measuring emission signals from the powder bed using the melt pool monitoring system, determining a difference between the measured emission signals and the predicted emission signal, and generating an alert if the difference exceeds a predetermined error threshold.

These and other features, aspects and advantages will become better understood with reference to the following description and appended claims. The accompanying drawings, which are incorporated in and constitute a part of this specification, illustrate embodiments of the invention and, together with the description, serve to explain certain principles of the invention.

BRIEF DESCRIPTION OF THE DRAWINGS

A full and enabling disclosure of the present invention, including the best mode thereof, directed to one of ordinary skill in the art, is set forth in the specification, which makes reference to the appended figures.

FIG. 1 shows a schematic view of an additive manufacturing machine according to an exemplary embodiment of the present subject matter.

FIG. 2 shows a close-up schematic view of a build platform of the exemplary additive manufacturing machine of FIG. 1 according to an exemplary embodiment of the present subject matter.

FIG. 3 is a method of monitoring a powder-bed additive manufacturing while considering thermal properties of the part and powder bed in accordance with one embodiment of the present disclosure.

FIG. 4 is schematic illustration of a cross sectional layer of an additively manufactured part including an exemplary toolpath for producing that layer in accordance with one embodiment of the present disclosure.

FIG. 5 is schematic illustration of adjacent cross sectional layers of an additively manufactured part including exemplary toolpaths for producing those layers in accordance with one embodiment of the present disclosure.

FIG. 6 illustrates a region of a part and a powder bed divided into a plurality of voxels to facilitate the formulation of a heat transfer model according to an exemplary embodiment of the present subject matter.

Repeat use of reference characters in the present specification and drawings is intended to represent the same or analogous features or elements of the present invention.

DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" may be used interchangeably to distinguish one component from another and are not intended to signify location or importance of the individual components. In addition, as used herein, terms of approximation, such as "approximately," "substantially," or "about," refer to being within a ten percent margin of error.

The present subject matter is generally directed to a method for real time monitoring of a powder-bed additive manufacturing processes, e.g., such as a DMLM process. In this regard, during the printing of each layer of a part, a system controller may operate a melt pool monitoring system and implement a control algorithm to monitor melt pool characteristics, such as emission intensity, melt pool dimensions, spectral signature, etc. Specifically, the present subject matter is directed to considering or compensating for thermal conductive properties of the part and the powder bed when identifying process issues.

The data stream recorded by the melt pool monitoring system may be analyzed and the measured data stream may be modified or compensated to incorporate or consider thermal conductive properties of the part and the powder bed. In general, a system controller may monitor the print process, including melt pool data, for each printed layer. The analysis may include scanning the melt pool data, predicting an emission signal based on the energy input and thermal conductive properties for a given region, measuring actual emission signals, and determining whether a difference between the measured and predicted emissions exceed some predetermined threshold. If such a threshold is exceeded, the controller may flag the layer for further analysis, stop the print process, make an adjustment to the print process, notify an operator, or make any other operating adjustment.

Thus, the system and methods described herein may be used to detect print errors or process faults and notify the operator accordingly. Alternatively, the additive manufacturing machine may be configured for making operating adjustments to correct or rectify such errors or printing issues. In this manner, process interruptions which may otherwise lead to scrapped parts, wasted material, lost time, and other unnecessary costs and delays may be avoided. Moreover, these issues may be detected in real time and addressed immediately, saving time and money as well as effectively increasing capacity. In addition, the present methods can be executed by a dedicated or system controller, may reduce computational requirements, may require minimal computer memory and processor resources, etc.

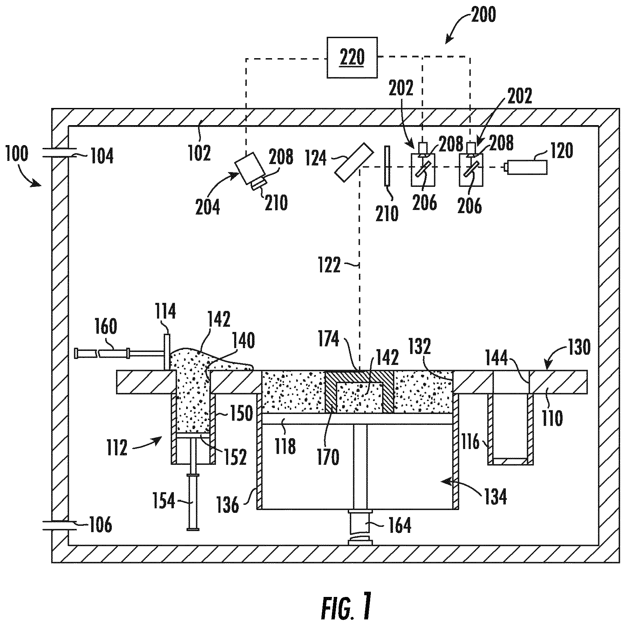

Referring to FIG. 1, a laser powder bed fusion system, such as a DMLS or DMLM system 100 will be described according to an exemplary embodiment. As illustrated, system 100 includes a fixed enclosure 102 which provides a contaminant-free and controlled environment for performing an additive manufacturing process. In this regard, for example, enclosure 102 serves to isolate and protect the other components of the system 100. In addition, enclosure 102 may be provided with a flow of an appropriate shielding gas, such as nitrogen, argon, or another suitable gas or gas mixture. In this regard, enclosure 102 may define a gas inlet port 104 and a gas outlet port 106 for receiving a flow of gas to create a static pressurized volume or a dynamic flow of gas.

Enclosure 102 may generally contain some or all components of AM system 100. According to an exemplary embodiment, AM system 100 generally includes a table 110, a powder supply 112, a scraper or recoater mechanism 114, an overflow container or reservoir 116, and a build platform 118 positioned within enclosure 102. In addition, an energy source 120 generates an energy beam 122 and a beam steering apparatus 124 directs energy beam 122 to facilitate the AM process as described in more detail below. Each of these components will be described in more detail below.

According to the illustrated embodiment, table 110 is a rigid structure defining a planar build surface 130. In addition, planar build surface 130 defines a build opening 132 through which build chamber 134 may be accessed. More specifically, according to the illustrated embodiment, build chamber 134 is defined at least in part by vertical walls 136 and build platform 118. In addition, build surface 130 defines a supply opening 140 through which additive powder 142 may be supplied from powder supply 112 and a reservoir opening 144 through which excess additive powder 142 may pass into overflow reservoir 116. Collected additive powders may optionally be treated to sieve out loose, agglomerated particles before re-use.

Powder supply 112 generally includes an additive powder supply container 150 which generally contains a volume of additive powder 142 sufficient for some or all of the additive manufacturing process for a specific part or parts. In addition, powder supply 112 includes a supply platform 152, which is a plate-like structure that is movable along the vertical direction within powder supply container 150. More specifically, a supply actuator 154 vertically supports supply platform 152 and selectively moves it up and down during the additive manufacturing process.

AM system 100 further includes recoater mechanism 114, which is a rigid, laterally-elongated structure that lies proximate build surface 130. For example, recoater mechanism 114 may be a hard scraper, a soft squeegee, or a roller. Recoater mechanism 114 is operably coupled to a recoater actuator 2 which is operable to selectively move recoater mechanism 114 along build surface 130. In addition, a platform actuator 164 is operably coupled to build platform 118 and is generally operable for moving build platform 118 along the vertical direction during the build process. Although actuators 154, 160, and 164 are illustrated as being hydraulic actuators, it should be appreciated that any other type and configuration of actuators may be used according to alternative embodiments, such as pneumatic actuators, hydraulic actuators, ball screw linear electric actuators, or any other suitable vertical support means. Other configurations are possible and within the scope of the present subject matter.

Energy source 120 may include any known device operable to generate a beam of suitable power and other operating characteristics to melt and fuse the metallic powder during the build process. For example, energy source 120 may be a laser or any other suitable irradiation emission directing device or irradiation device. Other directed-energy sources such as electron beam guns are suitable alternatives to a laser.

According to an exemplary embodiment, beam steering apparatus 124 includes one or more mirrors, prisms, lenses, and/or electromagnets operably coupled with suitable actuators and arranged to direct and focus energy beam 122. In this regard, for example, beam steering apparatus 124 may be a galvanometer scanner that moves or scans the focal point of the laser beam 122 emitted by energy source 120 across the build surface 130 during the laser melting and sintering processes. In this regard, energy beam 122 can be focused to a desired spot size and steered to a desired position in plane coincident with build surface 130. The galvanometer scanner in powder bed fusion technologies is typically of a fixed position but the movable mirrors/lenses contained therein allow various properties of the laser beam to be controlled and adjusted. It should be appreciated that other types of energy sources 120 may be used which may use and alternative beam steering apparatus 124. For example, if the energy source 120 is an electronic control unit for directing an electron beam, beam steering apparatus 124 may be, e.g. a deflecting coil.

Prior to an additive manufacturing process, recoater actuator 160 may be lowered to provide a supply of powder 142 of a desired composition (for example, metallic, ceramic, and/or organic powder) into supply container 150. In addition, platform actuator 164 may move build platform 118 to an initial high position, e.g., such that it substantially flush or coplanar with build surface 130. Build platform 118 is then lowered below build surface 130 by a selected layer increment. The layer increment affects the speed of the additive manufacturing process and the resolution of a components or parts 170 being manufactured. As an example, the layer increment may be about 10 to 100 micrometers (0.0004 to 0.004 in.).

Additive powder is then deposited over the build platform 118 before being fused by energy source 120. Specifically, supply actuator 154 may raise supply platform 152 to push powder through supply opening 140, exposing it above build surface 130. Recoater mechanism 114 may then be moved across build surface 130 by recoater actuator 160 to spread the raised additive powder 142 horizontally over build platform 118 (e.g., at the selected layer increment or thickness). Any excess additive powder 142 drops through the reservoir opening 144 into the overflow reservoir 116 as recoater mechanism 114 passes from left to right (as shown in FIG. 1). Subsequently, recoater mechanism 114 may be moved back to a starting position.

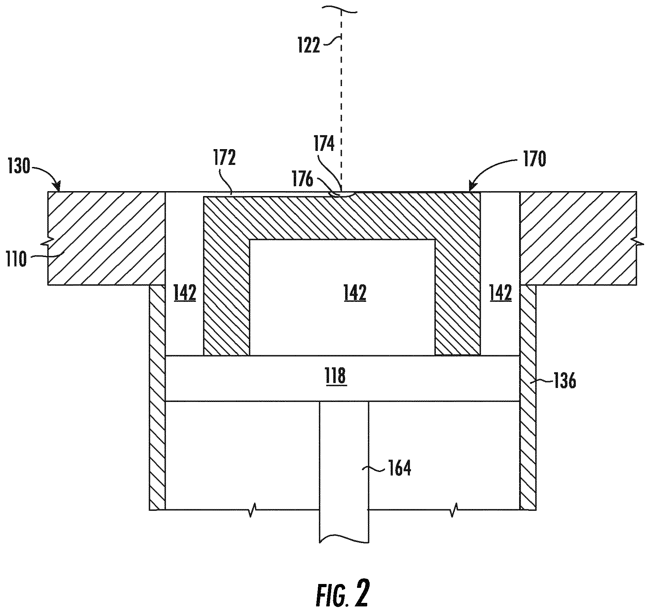

Therefore, as explained herein and illustrated in FIG. 1, recoater mechanism 114, recoater actuator 160, supply platform 152, and supply actuator 154 may generally operate to successively deposit layers of additive powder 142 or other additive material to facilitate the print process. As such, these components may collectively be referred to herein as powder depositing apparatus, system, or assembly. The leveled additive powder 142 may be referred to as a "build layer" 172 (see FIG. 2) and the exposed upper surface thereof may be referred to as build surface 130. When build platform 118 is lowered into build chamber 134 during a build process, build chamber 134 and build platform 118 collectively surround and support a mass of additive powder 142 along with any components 170 being built. This mass of powder is generally referred to as a "powder bed", and this specific category of additive manufacturing process may be referred to as a "powder bed process."

During the additive manufacturing process, the directed energy source 120 is used to melt a two-dimensional cross-section or layer of the component 170 being built. More specifically, energy beam 122 is emitted from energy source 120 and beam steering apparatus 124 is used to steer the focal point 174 of energy beam 122 over the exposed powder surface in an appropriate pattern. A small portion of exposed layer of the additive powder 142 surrounding focal point 174, referred to herein as a "weld pool" or "melt pool" or "heat effected zone" 176 (best seen in FIG. 2) is heated by energy beam 122 to a temperature allowing it to sinter or melt, flow, and consolidate. As an example, melt pool 176 may be on the order of 100 micrometers (0.004 in.) wide. This step may be referred to as fusing additive powder 142.

Build platform 118 is moved vertically downward by the layer increment, and another layer of additive powder 142 is applied in a similar thickness. The directed energy source 120 again emits energy beam 122 and beam steering apparatus 124 is used to steer the focal point 174 of energy beam 122 over the exposed powder surface in an appropriate pattern. The exposed layer of additive powder 142 is heated by energy beam 122 to a temperature allowing it to sinter or melt, flow, and consolidate both within the top layer and with the lower, previously-solidified layer. This cycle of moving build platform 118, applying additive powder 142, and then directed energy beam 122 to melt additive powder 142 is repeated until the entire component 170 is complete.

As explained briefly above, as energy source 120 and beam steering apparatus 124 direct energy beam 122, e.g., a laser beam or electron beam, onto the powder bed or build surface 130, the additive powders 142 are heated and begin to melt into melt pool 176 where they may fused to form the final component 170. Notably, the heated material emits electromagnetic energy in the form of visible and invisible light. A portion of the directed energy beam is reflected back into the galvanometer scanner or beam steering apparatus 124 and a portion is generally scattered in all other directions within enclosure 102. Generally speaking, monitoring the emitted and/or reflected electromagnetic energy may be used to improve process monitoring and control. An exemplary system for monitoring the additive manufacturing process, e.g., using melt pool monitoring system 200 to detect process faults or build errors are described below according to exemplary embodiments.

Referring still to FIG. 1, a melt pool monitoring system 200 which may be used with system 100 for monitoring melt pool 176 and the manufacturing process in general will be described according to an exemplary embodiment of the present subject matter. Melt pool monitoring system 200 includes one or more electromagnetic energy sensors, e.g., such as light sensors, for measuring the amount of visible or invisible electromagnetic energy emitted from or reflected by melt pool 176. In this regard, "electromagnetic energy," "emissions," or the like may be used herein to refer to one or more of light or emission intensity, photodiode voltage response, pyrometer voltages or current response, light emission geometric dimensions, spectral response, area or wavelength of emissions, sensor noise response, or any other suitable measurable quantity or quality of electromagnetic energy.

According to the illustrated embodiment, melt pool monitoring system 200 includes two on-axis light sensors 202 and one fixed, off-axis light sensor 204. Each of these sensors 202, 204 will be described below according to an exemplary embodiment. However, it should be appreciated that melt pool monitoring system 200 may include any other suitable type, number, and configuration of sensors for detecting electromagnetic energy and other properties of melt pool 176 or the process in general.

As used herein, "beamline" or "on-axis" melt-pool sensors 202 refer to sensors which generally are positioned along the path of energy beam 122. These sensors may monitor emitted and/or reflected light returning along the beam path. Specifically, as energy beam 122 forms melt pool 176, a portion of the emitted and reflected electromagnetic energy from melt pool 176 returns to energy source 120 along the same path. An on-axis sensor 202 may include a beam splitter 206 positioned along the beamline which may include a coating for redirecting a portion of the electromagnetic energy toward a beamline sensing element 208. In this regard, for example, sensing element 208 may be a photodiode, a pyrometer, an optical camera, an infrared (IR) camera, a photomultiplier tube, or a spectrometer or other spectral sensor configured for measuring electromagnetic energy in any frequency spectrum(s), such as infrared (IR), ultraviolet (UV), visible light, etc. On-axis sensor 202 can measure any suitable parameter of the filtered, reflected beam, such as intensity, frequency, wavelength, etc.

In addition, as used herein, "fixed" or "off-axis" melt-pool sensors 204 refer to sensors which generally have a fixed position relative to melt pool 176 and are used to measure electromagnetic energy generated by energy beam 122 and melt pool 176 within a specified field of view. In addition, fixed melt pool sensors 204 may include any suitable device, such as, e.g., a photodiode or infrared (IR) camera. Off-axis melt pool sensors 204 may operate in a manner similar to on-axis melt pool sensors 202, but are not located on the beamline and include a sensing element 208 that is generally configured for monitoring scattered electromagnetic energy from the melt pool 176.

According to exemplary embodiments of the present subject matter, melt pool monitoring system 200 may further include one or more filters 210 for filtering electromagnetic energy before it reaches sensing elements 208 of respective sensors 202, 204. For example, filter 210 may remove the wavelength of energy beam 122, such that sensors 202, 204 monitor only reflected electromagnetic energy. Alternatively, filters 210 may be configured for removing other unwanted wavelengths for improved monitoring of melt pool 176 or the process in general.

Melt pool monitoring system 200 further includes a controller 220 which is operably coupled with on-axis light sensor 202 and/or off-axis light sensor 204 for receiving signals corresponding to the detected electromagnetic energy. Controller 220 may be a dedicated controller for melt pool monitoring system 200 or may be system controller for operating AM system 100. Controller 220 may include one or more memory devices and one or more microprocessors, such as general or special purpose microprocessors operable to execute programming instructions or micro-control code associated with an additive manufacturing process or process monitoring. The memory may represent random access memory such as DRAM, or read only memory such as ROM or FLASH. In one embodiment, the processor executes programming instructions stored in memory. The memory may be a separate component from the processor or may be included onboard within the processor. Alternatively, controller 220 may be constructed without using a microprocessor, e.g., using a combination of discrete analog and/or digital logic circuitry (such as switches, amplifiers, integrators, comparators, flip-flops, AND gates, and the like) to perform control functionality instead of relying upon software.

It should be appreciated that AM system 100 and melt pool monitoring system 200 are illustrated and described herein only for explaining aspects of the present subject matter. However, the scope of the present subject matter is not limited to such exemplary embodiments, but is instead contemplated as including embodiments including variations and modifications. For example, melt pool monitoring system 200 may include different configurations and sensor types, AM system 100 may include alternative or additional features, and other variations may be applied according to alternative embodiments. In addition, other suitable forms and/or types of powder supply 112 may be used, such as a powder container that moves along build surface 130 while depositing additive powder at a predetermined flow rate. Furthermore, any suitable configuration of beam steering apparatus 124 may be used, e.g., based on the type of energy beam 122 generated. Other configurations are possible and within the scope of the present subject matter.

Now that the construction and configuration of AM system 100 and melt pool monitoring system 200 have been described according to exemplary embodiments of the present subject matter, an exemplary method 300 for monitoring an additive manufacturing process will be described according to an exemplary embodiment of the present subject matter. Method 300 can be used to monitor the operation of AM system 100 using melt pool monitoring system 200, or may be used to monitor any other suitable additive manufacturing machine using any other suitable sensor systems. In this regard, for example, controller 220 may be configured for implementing some or all steps of method 300. Further, it should be appreciated that the exemplary method 300 is discussed herein only to describe exemplary aspects of the present subject matter, and is not intended to be limiting.

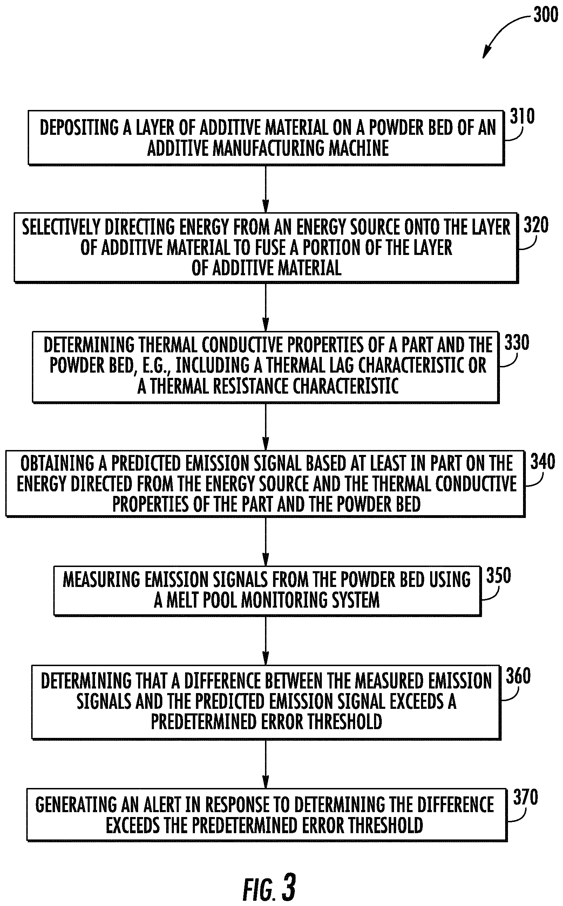

Referring now to FIG. 3, method 300 includes, at step 310, depositing a layer of additive material on a powder bed of an additive manufacturing machine. In addition, step 320 may include selectively directing energy from an energy source onto the layer of additive material to fuse a portion of the layer of additive material. In this regard, for example, energy source 120 may direct energy beam 122 across build layer 172 to form a single cross-sectional layer of component 170. As described in detail above, this process is repeated layer by layer until component 170 is completely formed or printed within the powder bed. As explained above, this process of irradiating additive powder may emit electromagnetic emissions and other sintering/melting byproducts that may be used to monitor the additive manufacturing process.

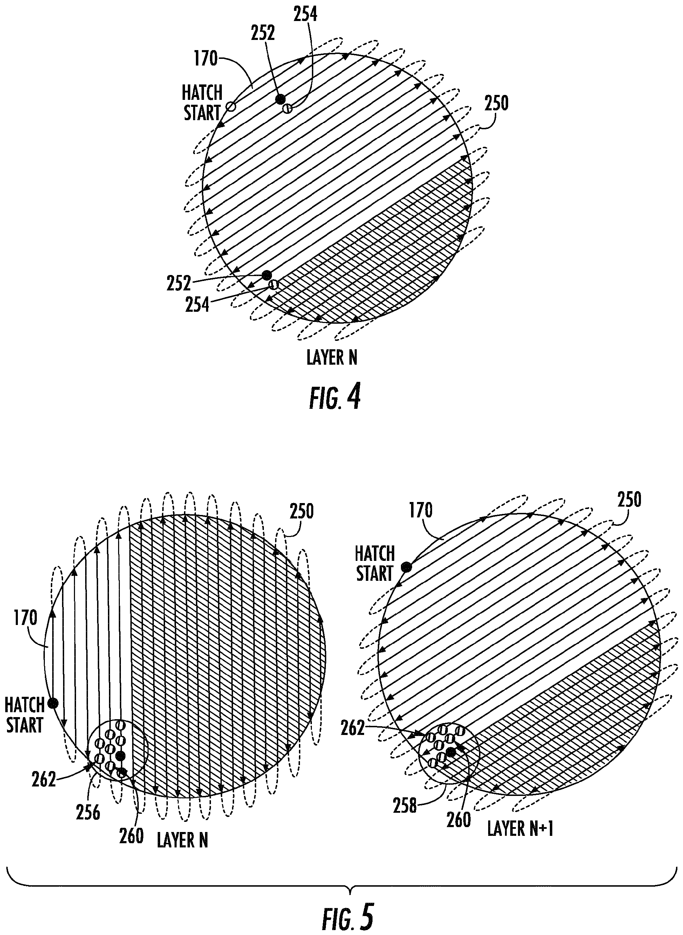

Notably, referring now briefly to FIGS. 4 and 5, conventional additive manufacturing machines typically move a focal point of the energy source along a predetermined toolpath, e.g., such as a commanded tool path 250. The commanded tool path 250 generally defines a path for moving the laser focal point along several adjacent and parallel "passes" across a region to be printed, and selectively energizing the laser at a power level to sinter or melt the additive powder 142 when so desired. In general, most process monitoring algorithms monitor absolute temperature or electromagnetic emissions at the focal point or melt pool in order to detect print issues or process faults.

However, if there insufficient time delay between printing adjacent points or regions within a powder layer, either during one or more adjacent passes (see, e.g., FIG. 4), between adjacent layers of the part (see, e.g., FIG. 5), or within regions otherwise thermally coupled within the powder bed, the measured temperatures or electromagnetic emission may be high enough to indicate a process fault, even though no such fault exists. Similarly, if the part and the powder bed have a large thermal resistance (e.g., such that thermal energy dissipates slowly), thermal energy within the part and powder bed may affect melt pool measurements on subsequent passes. Method 300 is generally directed to compensating for the thermal conductive properties of the part and the powder bed, e.g., by considering the thermal lag or resistance within the part and/or the powder bed, when identifying print errors or process faults.

Step 330 includes determining thermal conductive properties of a part and the powder bed. In this manner, by determining thermal conductive properties of the part and the powder bed, an informed decision may be made as to whether measured emission signals are indicative of print errors or other process issues. As used herein, "thermal conductive properties" may be used generally to refer to any thermal quality characteristic of the part being printed, the powder bed in which the parts are contained, thermal properties of the additive manufacturing system or environment in general, the environment surrounding the powder bed or the flow of purge gas, etc. Although exemplary thermal conductive properties are described below for the purpose of explaining aspects of the present subject matter, the present invention is not limited to such properties.

According to one embodiment, the thermal conductive properties may be a thermal lag characteristic which is intended to refer to an amount of lag time between heating thermally proximate points or regions within the part or powder bed. Alternatively, the thermal lag characteristic may be any other measure of the ability of a specific point or region within the part or powder bed to dissipate thermal energy imparted by the energy source or other heat sources. In this regard, for example, the thermal lag characteristic may be a time lag between when an energy source has been directed at a first point (e.g., as identified by point 252 in FIG. 4) and when the energy source has been directed at a second point (e.g., as identified by point 254 in FIG. 4), the second point 254 being adjacent the first point 252. Although first point 252 and second point 254 are illustrated as being in adjacent passes on the commanded tool path 250, it should be appreciated that the thermal lag characteristic may also be determined between points on other, more distant passes, or other points within such passes, as described in more detail below.

Thus, the time lag may be a general measure of the amount of time since energy source 120 has directed energy in a particular region or space within the layer of additive material, the part, the powder bed, etc. Although the thermal lag characteristic is referred to as a "time lag" herein, it should be appreciated that this thermal lag characteristic need not be measured specifically in a time scale, but could instead be quantified in any other suitable manner. For example, the "time lag" may be measured as a percentage of initial thermal energy from previously energizing or heating a region that has dissipated when the energy source makes another pass by the same region or point.

As used herein, two points may be considered to be within a "particular region" for the purposes of determining time lag if located within a predetermined distance of each other. For example, the particular region or what qualifies as an "adjacent" point may be defined in a two- or three-dimensional space and may incorporate both the additive powder 142 within powder bed as well as the component 170 located therein. Thus, the thermal lag characteristic that may be the amount of time since energy source 120 has directed focal point 174 within a specific volume surrounding its present location. In other words, the "region" for determining the thermal lag characteristic may refer to all locations within the part and the powder bed that are within a specified distance from a focal point of the energy source. In other words, second point 254 may be "adjacent" first point 252 if it is located within a specified distance from first point 252 within a two-dimensional space (e.g., within a single build layer 172) or within a three-dimensional space (e.g., within multiple build layers 172).

According still other embodiments, the thermal lag characteristic may be determined using historical time data associated with a focal point of the energy source. In this regard, for example, the thermal lag characteristic relative to two adjacent points on a cross-sectional layer of the component may be calculated as the time difference between a first timestamp when the first point 252 is fused and a second timestamp when the second point 254 is fused. Thus, the amount of time it takes for energy source 120 to move focal point 174 from first point 252 to second point 254 along commanded tool path 250 may be the thermal lag characteristic. Notably, this thermal lag characteristic can be used to estimate the amount of thermal energy that has dissipated from the region since the last pass of the energy beam 122. Thus, for example, the thermal lag characteristic may be calculated as a time difference between a subsequent timestamp associated with emission data measured at a focal point of the energy source and a previous timestamp associated within emission data measured at a region within a specified distance of the focal point at the subsequent timestamp.

Similarly, the thermal lag characteristic may be an amount of time between the fusing of a first region in a first additive layer (e.g., as identified by region 256 in layer *n* of FIG. 5) and the fusing of a second region immediately above the first region in a subsequent additive layer (e.g., as identified by region 258 in layer *n + 1* of FIG. 5). It should be appreciated that the thermal lag characteristic may be determined in any other suitable manner and may include any other suitable information relevant to the dissipation of thermal energy within the printed part or powder bed. Whether the electromagnetic emissions are measured at individual points (e.g., such as points 252, 254 in FIG. 4) or in individual regions (e.g., such as regions 256, 258 in FIG. 5), the goal may generally be capturing a proxy for the initial temperature of the material in what is sometimes referred to as the "heat affected zone." The size, shape, and resolution of the heat affected zone may vary depending on the application.

In addition, according to alternative embodiments, and in order to simplify calculation, instead of using individual data points, we can look at a mean value for all the points in a given region. In this regard, for example, a region including all points within a specified distance of the focal point may be represented as an average emission for all of those points. Alternatively, a particular region may be divided up into voxels (e.g., as described below) and electromagnetic emissions may be measured for each voxel. The electromagnetic emission of these voxels may then be averaged to determine a representative electromagnetic emission for the region. Other averaging and approximation methods are possible and within the scope of the present subject matter.

Furthermore, when the electromagnetic emissions are obtained at multiple locations proximate a focal point or within a given region (e.g., regions 256, 258), increased accuracy or resolution to the focal point emissions may be approximated by applying a weighting function to the time differences. For example, as shown in FIG. 5, a first layer 260 (which immediately surrounds the focal point) may be weighted more heavily than a second layer 262 (which surrounds first layer 260), which may be weighted more heavily than a third layer (not shown), etc. Thus, the further away the point is from the focal point, the less influence that thermal lag characteristic has on modifying the measured electromagnetic emissions.

According to other exemplary embodiments, the thermal conductive properties may be a thermal resistance characteristic, which generally refers to the ability of heat or thermal energy within a particular region of the part or powder bed to dissipate. Specifically, for example, the thermal resistance characteristic may include a thermal energy transfer rate for a particular region within the layer of additive material. In this regard, the thermal energy transfer rate may represent any measure of the ability of the part or powder bed to retain and/or transfer thermal energy. According to exemplary embodiments, this thermal energy transfer rate may be determined from a heat transfer model, as described below.

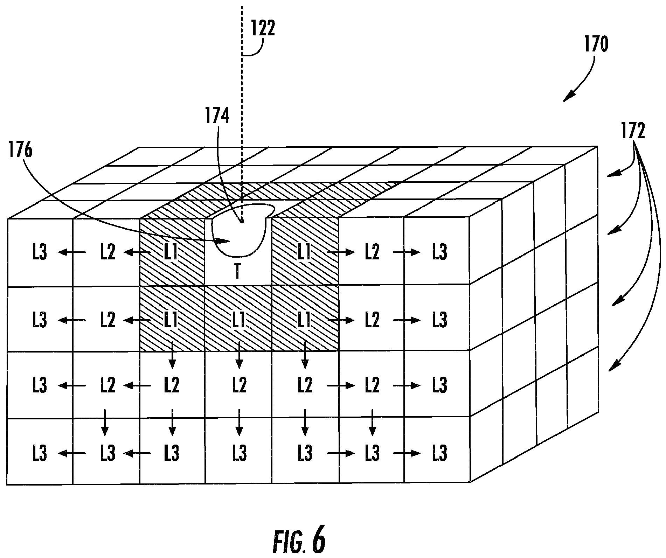

For example, as illustrated in FIG. 6, the part and the powder bed may be divided into a plurality of voxels filling a three-dimensional space surrounding a focal point of the energy source (e.g., identified as voxel T). A thermal resistance of each of the plurality of voxels may be determined or estimated and assigned or associated with each voxel. Then, a heat transfer model may be formulated by summing the thermal resistance of each of the plurality of voxels. In this regard, the thermal resistances may be summed in a manner analogous to electrical resistances in an electrical circuit. Specifically, according to an exemplary embodiment, the heat transfer model may comprise the following:

$$R_T = \sum_{i=1}^{m} \frac{1}{\sum_{1}^{n} \frac{1}{R_{Li,n}}}$$

where:

$R_T$ = a thermal resistance associated with heat flow away from a focal point of the energy source;
$R_{Li,n}$ = a thermal resistance of a voxel;
$m$ = an index layer of the voxel of increasing distance from the laser focal point whose thermal resistances are essentially in series with one another; and
$n$ = an index of individual voxel within a given layer roughly equal in distance from the laser focal point whose thermal resistances are essentially acting in parallel to one another.

As shown in FIG. 6, the plurality of voxels includes cubic voxels, with T representing the voxel where focal point 174 of energy source 120 is directed. Each of voxels L1 immediately surround voxel T (e.g., similar to first layer 260 in FIG. 5), voxels L2 represent the next adjacent layer of voxels (e.g., similar to second layer 162 in FIG. 5), voxels L3 surround voxels L2, etc. Notably, using such a representation, the thermal resistance of voxels may be summed in parallel (e.g., if within the same layer) or in series (e.g., if within adjacent layers). Although cubic voxels are illustrated, it should be appreciated that according to alternative embodiments any other suitable size, shape, or configuration of voxels may be used. For example, voxels may be determined in spherical coordinates, or may be polygonal, quadrilateral, or any other suitable mesh shape, may have any suitable size and dimension depending on the precision needed, etc. In addition, a mesh generation algorithms may be used to generate the plurality of voxels.

Although methods of determining or estimating thermal conductive properties of the part and the powder bed are described herein, it should be appreciated that these properties and their effects on the print process may be determined in any other suitable manner. For example, the thermal conductive properties may be determined using finite element analysis of a part model or CAD file. In addition, the thermal conductive properties may be determined from a commanded tool path, which is typically a derivative of the part model. According to still other embodiments, empirical data may be used to approximate thermal conductive properties of future builds, real-time estimates may be made based on the projected position, trajectory, and power level of the energy source, etc.

It should be appreciated that various simplifications and variations may be made to the heat transfer model described above, e.g., in order to simplify computational requirements. For example, the thermal resistance for each voxel may be estimated or approximated in any suitable manner to make the calculations computationally feasible in real time. In this regard, for example, the geometry could be simplified by: only looking straight down from the laser focal point and neglecting voxels to the left, right, front, or back; considering heat transfer only some predetermined distance from the laser focal point (e.g. four or five voxel layers away, e.g., because the influence of voxels decreases with distance from the heat source); and/or applying a weighting function or factor to voxels depending on their distance from the laser focal point (heat source), as described above.

Examples of how the thermal conductivity of the thermal resistance model could be simplified include: treating voxels as either all powder or all solid material, e.g., using a single thermal conductivity/resistivity value depending on whether a voxel is majority powder or solid; replacing the thermal conductivity with a set of binary values, e.g., 10 for solid material and 1 for powder. Elements of resistance may be further simplified by: calculating the number of "solid" voxels moving straight down from the laser focal point (T) some arbitrary distance; calculating only a distance from the laser focal point to nearest powder in a voxel layer going straight down; calculating the shortest distance, e.g., number of voxels, to get to the build plate or alternatively some distance below the layer on which the laser if focused going only through solidified voxels; and/or estimating a solid fraction (or powder fraction) of one or more layers of voxels moving away from the laser focal point (e.g. fraction of the L1 voxels that are solid, fraction of the L2 voxels that are solid), or some function that looks at the solid fraction as you move further away from the laser focal point (e.g. fraction of L1 voxels that are solid + 0.5 x fraction of L2 voxels that are solid + 0.25 x fraction of L3 voxels that are solid, where the 0.5, and 0.25 values are arbitrary and could be replaced by a decay function or empirically derived constants of some sort).

In addition, the part model, CAD file, heat transfer model, or other mathematical or theoretical models may be formulated in any suitable manner to facilitate statistical process control of the additive manufacturing processes. For example, a model training process may be used to create a model, which is a tool that may be used to predict system characteristics or behavior in response to various system inputs or parameters. In general, the model is intended to help determine what is a normal response of the system, e.g., a normal thermal emission signal of an additive manufacturing process, in response to system inputs, e.g., thermal resistance and energy source power input.

According to exemplary embodiments, model training may include obtaining process data of a plurality of representative process builds. For example, the process data may include thermal conductive properties of the plurality of representative process builds, such as thermal lag characteristics, thermal resistance characteristics, melt pool or powder bed temperatures, or any other related thermal energy data. Model training may further include selecting a subset of the process data, such as system parameters that are known to have a strong correlation with a particular output parameter or which produce a reproducible or repeatable result. The model may then be trained based on the subset of the process data, e.g., in order to obtain an accurate and reliable heat transfer model.

Generally speaking, the thermal model or any other suitable system model may be developed or formulated by reading the melt pool emission data from select layers of one or more builds - this is the "training data set." First, the "reduced data set" is found, e.g. via an algorithm such as NIPALS for principal component analysis. This converts a set of y output variables (in this case photodiode voltage, melt pool area, etc.) as well as the set of x input variables (a selection of the list of variables such as laser power, laser power drive signal, x/y position of laser focus on build surface, laser scan speed, laser scan direction, on-axis electromagnetic emission from the melt pool, on-axis electromagnetic emission from the plasma, off-axis electromagnetic emission from melt pool, off-axis electromagnetic emission from plasma, incidence angle of laser relative to build surface, incidence angle of laser relative to workpiece, gas flow velocity, powder bed temperature, powder layer thickness, or the thermal conductive properties of workpiece, etc.) into some statistically defined reduced variable set.

Generally speaking these variable sets may be referred to as vectors Y and X. A model is fit between Y and X of the form Y = f(X). The outputs of this model training process include model constants along with one or more statistical measures of "normal variation." For a simple example, say the model has the familiar linear form, Y = mX+b. Here the slope, m, and intercept, b would be the model generated model constants. Additionally, say that for the difference between the predicted Y from the Y=mX+b model and the measured Y was found to have a normal distribution with a standard deviation of "s." This or a similar statistic would the other model training output. These model constants would be ingested into the control software.

Thus, the general model training process may include 1) generating and storing the model training outputs; 2) selecting the training reduced data set to reduce computational requirements; 3) elaborating on some of the different approaches to generating the reduced variable set and model (e.g. single block methods such as principal component analysis, multiblock methods such as partial least squares regression, neural network based modeling, random forest modeling, etc.; and 4.) expanding the concept to direct part quality based "y" variables such as material density, tensile strength, surface finish, etc. (as opposed to indirect quality metric y's like melt pool emission/photodiode voltage).

After the system model has been trained in the manner described above, normal system operating parameters may be determined based on system inputs. For example, if the system model is a heat transfer model including thermal conductive properties as described herein, a user may input a commanded tool path and laser power profile, and the heat transfer model may produce an expected melt pool emission signature or temperature profile. Actual emissions from the melt pool may then be monitored during an actual print process (e.g., using melt pool monitoring system 200), and print errors or issues may be identified by comparing the system output predicted by the model to the actual output. Steps 340 through 370 are directed to one exemplary method of making such a comparison, identifying issues, and taking corrective action.

Step 340 includes obtaining a predicted emission signal based at least in part on the energy directed from the energy source and the thermal conductive properties of the part and the powder bed. In this regard, the heat transfer model or other system model may be used in a manner described above to predict melt pool emission signals, e.g., based on laser input, thermal lag characteristics, thermal resistance characteristics, etc. These predicted emission signals generally represent a "normal process" that is free of print errors or other process issues.

Step 350 generally includes measuring emission signals from the powder bed using a melt pool monitoring system. In this regard, for example, melt pool monitoring system 200 may generally monitor electromagnetic emissions from the powder bed as it is being selectively fused, e.g., as described above. Thus, during the printing process, melt pool monitoring system 200 may generally obtain data indicative of melt pool emissions in any suitable format which may be further assessed or analyzed to monitor the print process and make determinations related to desirable process adjustments. Specifically, for example, on axis light sensor 202 may track focal point 174 as energy beam 122 moves along a commanded tool path while measuring electromagnetic emissions.

Step 360 includes determining that a difference between the measured emission signals and the predicted emission signal exceeds a predetermined error threshold. The predetermined error threshold may be set by the manufacturer, controlled by the operator, set by the part model, or determined in any other suitable manner. It should be appreciated that the "difference" between the measured and predicted emission signals need not be a simple mathematical subtraction of one signal from the other. Instead, according to exemplary embodiments, the difference is intended to refer to some statistical measure regarding the relationship between the measured and predicted emission signals, and such difference may be determined using any suitable statistical methods, analysis, algorithms, etc.

Method 300 further includes, at step 350, generating an alert in response to determining the difference exceeds the predetermined error threshold. Thus, when the difference exceeds the predetermined error threshold, controller 220 may be configured for generating an alert, making a process change, or performing some other control action. For example, the alert may be an audio or visual indication provided to an operator of the additive manufacturing machine. For example, the alert or indication may be displayed on a monitor for review of an operator (e.g., as a time-based plot, control chart, 3D indication or representation of compensated emission signal, etc.). Alternatively, the alert may be an email, text message, or other electronic message.

Alternatively, the alert may instead be an electronic signal to the machine controls that would stop or adjust a build parameter of the print process. In this regard, controller 220 may be programmed to automatically make the process adjustments to the additive manufacturing machine when the difference exceeds the predetermined error threshold. For example, controller 220 may be configured for adjusting an incidence angle of the energy source 120, the intensity of energy beam 122, the scan rate, the tool path, or any other process adjustment which will affect the printing of a cross-sectional layer or component 170 itself.

FIG. 3 depicts an exemplary control method having steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure. Moreover, although aspects of the methods are explained using AM system 100 and melt pool monitoring system 200 as an example, it should be appreciated that these methods may be applied to monitoring the operation of any suitable additive manufacturing machine.

Further aspects of the invention are provided by the subject matter of the following clauses:

1. A method of monitoring a powder-bed additive manufacturing process, the method comprising: depositing a layer of additive material on a powder bed of an additive manufacturing machine; selectively directing energy from an energy source onto the layer of additive material to fuse a portion of the layer of additive material; obtaining a predicted emission signal based at least in part on the energy directed from the energy source and thermal conductive properties of the part and the powder bed; measuring emission signals from the powder bed using a melt pool monitoring system; determining a difference between the measured emission signals and the predicted emission signal; and generating an alert if the difference exceeds a predetermined error threshold.

2. The method of any preceding clause, wherein the thermal conductive properties comprise one or more of a thermal lag characteristic or a thermal resistance characteristic.

3. The method of any preceding clause, wherein the thermal lag characteristic is a time lag between when the energy source has been directed at a first point and when the energy source has been directed at a second point, the second point being adjacent the first point.

4. The method of any preceding clause, wherein the second point is adjacent the first point if the second point is located within a specified distance from the first point within a three-dimensional space.

5. The method of any preceding clause, wherein the thermal lag characteristic is calculated as a time difference between a subsequent timestamp associated with emission data measured at a focal point of the energy source and a previous timestamp associated within emission data measured at a region within a specified distance of the focal point at the subsequent timestamp.

6. The method of any preceding clause, wherein the thermal lag characteristic is an amount of time between the fusing of a first region in a first additive layer and the fusing of a second region immediately above the first region in a subsequent additive layer.

7. The method of any preceding clause, wherein the thermal resistance characteristic comprises a thermal energy transfer rate for a particular region within a specified distance from a focal point within a three-dimensional space in the part and the powder bed.

8. The method of any preceding clause, wherein the thermal energy transfer rate is obtained by: dividing the part and the powder bed into a plurality of voxels filling a three-dimensional space adjacent a focal point of the energy source; estimating a thermal resistance of each of the plurality of voxels; and formulating a heat transfer model by summing the thermal resistance of each of the plurality of voxels.

9. The method of any preceding clause, wherein the heat transfer model comprises:

$$R_T = \sum_{i=1}^{m} \frac{1}{\sum_{1}^{n} \frac{1}{R_{Li,n}}}$$ where: $R_T$ = a thermal resistance associated with heat flow away from a focal point of the energy source; $R_{Li,n}$ = a thermal resistance of a voxel; m = an index layer of the voxel of increasing distance from the laser focal point whose thermal resistances are essentially in series with one another; and $n$ = an index of individual voxel within a given layer roughly equal in distance from the laser focal point whose thermal resistances are essentially acting in parallel to one another.

10. The method of any preceding clause, wherein the plurality of voxels are cubic voxels.

11. The method of any preceding clause, wherein a mesh generation algorithm is used to generate the plurality of voxels.

12. The method of any preceding clause, wherein the thermal conductive properties are determined using finite element analysis of a part or additive build model.

13. The method of any preceding clause, wherein the thermal conductive properties are defined according to a heat transfer model, the heat transfer model being developed by: obtaining process data of a plurality of representative process builds, the process data comprising thermal conductive properties of the plurality of representative process builds; selecting a subset of the process data; training the heat transfer model based on the subset of the process data; and obtaining a model prediction of a subsequent build process.

14. An additive manufacturing machine comprising: a powder depositing system for depositing a layer of additive material onto a powder bed of the additive manufacturing machine; an energy source for selectively directing energy onto the layer of additive material to fuse a portion of the layer of additive material; a melt pool monitoring system for measuring electromagnetic energy emitted from the powder bed; and a controller operably coupled to the melt pool monitoring system, the controller being configured for: obtaining thermal conductive properties of the part and the powder bed, wherein the thermal conductive properties comprise one or more of a thermal lag characteristic or a thermal resistance characteristic; obtaining a predicted emission signal based at least in part on the energy directed from the energy source and the thermal conductive properties of the part and the powder bed; measuring emission signals from the powder bed using the melt pool monitoring system; determining a difference between the measured emission signals and the predicted emission signal; and generating an alert if the difference exceeds a predetermined error threshold.

15. The additive manufacturing machine of any preceding clause, wherein the thermal lag characteristic is a time lag between when the energy source has been directed at a first point and when the energy source has been directed at a second point, the second point being adjacent the first point.

16. The additive manufacturing machine of any preceding clause, wherein the second point is adjacent the first point if the second point is located within a specified distance from the first point within a three-dimensional space.

17. The additive manufacturing machine of any preceding clause, wherein the thermal lag characteristic is calculated as a time difference between a subsequent timestamp associated with emission data measured at a focal point of the energy source and a previous timestamp associated within emission data measured at a region within a specified distance of the focal point at the subsequent timestamp.

18. The additive manufacturing machine of any preceding clause, wherein the thermal lag characteristic is an amount of time between the fusing of a first point in a first additive layer and the fusing of a second point immediately above the first point in a subsequent additive layer.

19. The additive manufacturing machine of any preceding clause, wherein the thermal resistance characteristic comprises a thermal energy transfer rate for a particular region within the layer of additive material.

20. The additive manufacturing machine of any preceding clause, wherein the thermal energy transfer rate is obtained by: dividing the part and the powder bed up into a plurality of voxels filling a three-dimensional space surrounding a focal point of the energy source; estimating a thermal resistance of each of the plurality of voxels; and formulating a heat transfer model by summing the thermal resistance of each of the plurality of voxels.

This written description uses exemplary embodiments to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

**Claims**

1. A method (300) of monitoring a powder-bed additive manufacturing process, the method (300) comprising:

depositing a layer of additive material on a powder bed of an additive manufacturing machine;
selectively directing energy from an energy source (120) onto the layer of additive material to fuse a portion of the layer of additive material;
obtaining a predicted emission signal based at least in part on the energy directed from the energy source (120) and thermal conductive properties of the part and the powder bed;
measuring emission signals from the powder bed using a melt pool monitoring system (200);
determining a difference between the measured emission signals and the predicted emission signal; and
generating an alert if the difference exceeds a predetermined error threshold.

**2.** The method (300) of claim 1, wherein the thermal conductive properties comprise one or more of a thermal lag characteristic or a thermal resistance characteristic.

**3.** The method (300) of claim 2, wherein the thermal lag characteristic is a time lag between when the energy source (120) has been directed at a first point (252) and when the energy source (120) has been directed at a second point (254), the second point (254) being adjacent the first point (252).

**4.** The method (300) of claim 3, wherein the second point (254) is adjacent the first point (252) if the second point (254) is located within a specified distance from the first point (252) within a three-dimensional space.

**5.** The method (300) of any preceding claim, wherein the thermal lag characteristic is calculated as a time difference between a subsequent timestamp associated with emission data measured at a focal point (174) of the energy source (120) and a previous timestamp associated within emission data measured at a region (256) within a specified distance of the focal point (174) at the subsequent timestamp.

**6.** The method (300) of any preceding claim, wherein the thermal lag characteristic is an amount of time between the fusing of a first region (256) in a first additive layer and the fusing of a second region (256) immediately above the first region (256) in a subsequent additive layer.

**7.** The method (300) of any preceding claim, wherein the thermal resistance characteristic comprises a thermal energy transfer rate for a particular region (256) within a specified distance from a focal point (174) within a three-dimensional space in the part and the powder bed.

**8.** The method (300) of any preceding claim, wherein the thermal energy transfer rate is obtained by:

dividing the part and the powder bed into a plurality of voxels filling a three-dimensional space adjacent a focal point (174) of the energy source (120);
estimating a thermal resistance of each of the plurality of voxels; and
formulating a heat transfer model by summing the thermal resistance of each of the plurality of voxels.

**9.** The method (300) of any preceding claim, wherein the heat transfer model comprises:

$$R_T = \sum_{i=1}^{m} \frac{1}{\sum_{1}^{n} \frac{1}{R_{Li,n}}}$$

where:

$R_T$ = a thermal resistance associated with heat flow away from a focal point (174) of the energy source (120);
$R_{Li,n}$ = a thermal resistance of a voxel;
$m$ = an index layer of the voxel of increasing distance from the laser focal point (174) whose thermal resistances are essentially in series with one another; and
$n$ = an index of individual voxel within a given layer roughly equal in distance from the laser focal point (174) whose thermal resistances are essentially acting in parallel to one another.

**10.** The method (300) of any preceding claim, wherein the plurality of voxels are cubic voxels.

**11.** The method (300) of any preceding claim, wherein a mesh generation algorithm is used to generate the plurality of voxels.

**12.** The method (300) of any preceding claim, wherein the thermal conductive properties are determined using finite element analysis of a part or additive build model.

**13.** The method (300) of claim 1, wherein the thermal conductive properties are defined according to a heat transfer model, the heat transfer model being developed by:

obtaining process data of a plurality of representative process builds, the process data comprising thermal conductive properties of the plurality of representative process builds;
selecting a subset of the process data;
training the heat transfer model based on the subset of the process data; and
obtaining a model prediction of a subsequent build process.

**14.** An additive manufacturing machine comprising:

a powder (142) depositing system (100) for depositing a layer of additive material onto a powder bed of the additive manufacturing machine;
an energy source (120) for selectively directing energy onto the layer of additive material to fuse a portion of the layer of additive material;
a melt pool monitoring system (200) for measuring electromagnetic energy emitted from the powder bed; and
a controller (220) operably coupled to the melt pool monitoring system (200), the controller (220) being configured for:

obtaining thermal conductive properties of the part and the powder bed, wherein the thermal conductive properties comprise one or more of a thermal lag characteristic or a thermal resistance characteristic;
obtaining a predicted emission signal based at least in part on the energy directed from the energy source (120) and the thermal conductive properties of the part and the powder bed;
measuring emission signals from the powder bed using the melt pool monitoring system (200);
determining a difference between the measured emission signals and the predicted emission signal; and
generating an alert if the difference exceeds a predetermined error threshold.

15. The additive manufacturing machine of claim 15, wherein the thermal lag characteristic is a time lag between when the energy source (120) has been directed at a first point (252) and when the energy source (120) has been directed at a second point (254), the second point (254) being adjacent the first point (252).

*FIG. 1*

FIG. 2

300

┌─────────────────────────────────────────────────────────┐
│ DEPOSITING A LAYER OF ADDITIVE MATERIAL ON A POWDER BED OF AN │ 310
│ ADDITIVE MANUFACTURING MACHINE │
└─────────────────────────────────────────────────────────┘

┌─────────────────────────────────────────────────────────┐
│ SELECTIVELY DIRECTING ENERGY FROM AN ENERGY SOURCE ONTO THE LAYER │ 320
│ OF ADDITIVE MATERIAL TO FUSE A PORTION OF THE LAYER │
│ OF ADDITIVE MATERIAL │
└─────────────────────────────────────────────────────────┘

┌─────────────────────────────────────────────────────────┐
│ DETERMINING THERMAL CONDUCTIVE PROPERTIES OF A PART AND THE │ 330
│ POWDER BED, E.G., INCLUDING A THERMAL LAG CHARACTERISTIC OR │
│ A THERMAL RESISTANCE CHARACTERISTIC │
└─────────────────────────────────────────────────────────┘

┌─────────────────────────────────────────────────────────┐
│ OBTAINING A PREDICTED EMISSION SIGNAL BASED AT LEAST IN PART ON THE │ 340
│ ENERGY DIRECTED FROM THE ENERGY SOURCE AND THE THERMAL CONDUCTIVE │
│ PROPERTIES OF THE PART AND THE POWDER BED │
└─────────────────────────────────────────────────────────┘

┌─────────────────────────────────────────────────────────┐
│ MEASURING EMISSION SIGNALS FROM THE POWDER BED USING │ 350
│ A MELT POOL MONITORING SYSTEM │
└─────────────────────────────────────────────────────────┘

┌─────────────────────────────────────────────────────────┐
│ DETERMINING THAT A DIFFERENCE BETWEEN THE MEASURED EMISSION │ 360
│ SIGNALS AND THE PREDICTED EMISSION SIGNAL EXCEEDS A │
│ PREDETERMINED ERROR THRESHOLD │
└─────────────────────────────────────────────────────────┘

┌─────────────────────────────────────────────────────────┐
│ GENERATING AN ALERT IN RESPONSE TO DETERMINING THE DIFFERENCE │ 370
│ EXCEEDS THE PREDETERMINED ERROR THRESHOLD │
└─────────────────────────────────────────────────────────┘

*FIG. 3*

FIG. 4

FIG. 5

*FIG. 6*

Europäisches
Patentamt

European
Patent Office

Office européen
des brevets

# EUROPEAN SEARCH REPORT

Application Number

EP 19 20 6908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/239891 A1 (BULLER BENYAMIN [US] ET AL) 24 August 2017 (2017-08-24) * paragraphs [0163], [0180] - [0187], [0189], [0208] - [0211], [0224], [0230] * * figure 1 * | 1-15 | INV.<br>B22F3/105<br>B33Y50/02<br>B33Y10/00<br>B33Y30/00 |
| A | US 2018/193954 A1 (YUAN LANG [US] ET AL) 12 July 2018 (2018-07-12) * the whole document * | 1-15 | |

TECHNICAL FIELDS
SEARCHED (IPC)

B22F
B33Y

The present search report has been drawn up for all claims

| Place of search | Date of completion of the search | Examiner |
|---|---|---|
| The Hague | 20 December 2019 | Forestier, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**EP 3 650 143 A1**

## ANNEX TO THE EUROPEAN SEARCH REPORT
## ON EUROPEAN PATENT APPLICATION NO.

EP 19 20 6908

20-12-2019

| Patent document cited in search report | Publication date | Patent family member(s) | | Publication date |
|---|---|---|---|---|
| US 2017239891 A1 | 24-08-2017 | CN | 108883575 A | 23-11-2018 |
| | | JP | 2019513577 A | 30-05-2019 |
| | | US | 2017239719 A1 | 24-08-2017 |
| | | US | 2017239720 A1 | 24-08-2017 |
| | | US | 2017239721 A1 | 24-08-2017 |
| | | US | 2017239752 A1 | 24-08-2017 |
| | | US | 2017239891 A1 | 24-08-2017 |
| | | US | 2017239892 A1 | 24-08-2017 |
| | | US | 2018133801 A1 | 17-05-2018 |
| | | US | 2019143412 A1 | 16-05-2019 |
| | | WO | 2017143077 A1 | 24-08-2017 |
| US 2018193954 A1 | 12-07-2018 | CN | 110366463 A | 22-10-2019 |
| | | EP | 3565682 A1 | 13-11-2019 |
| | | US | 2018193954 A1 | 12-07-2018 |
| | | WO | 2018128827 A1 | 12-07-2018 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62757859